# EUROPEAN PATENT SPECIFICATION

(11) **EP 3 810 451 B1**
(45) Date of publication and mention of the grant of the patent: **21.09.2022**
(21) Application number: 19736585.1
(22) Date of filing: 21.06.2019
(51) Int. Cl.: B60K 6/48, B60K 6/365, B60K 6/543, B60K 6/40

(54) **HYBRID POWERTRAIN WITH A VARIABLE TRANSMISSION**
HYBRIDANTRIEBSSTRANG MIT EINEM VARIABLEN GETRIEBE
GROUPE MOTOPROPULSEUR HYBRIDE AVEC UNE TRANSMISSION VARIABLE

(30) Priority: 22.06.2018 NL 1042909; 06.03.2019 EP 19020107
(43) Date of publication of application: 28.04.2021
(73) Proprietor: Robert Bosch GmbH, 70442 Stuttgart (DE)
(72) Inventor: KLASSEN, Amo, 5000 AM Tilburg (NL); VAN DER LEEST, Arjan, 5000 AM Tilburg (NL); VAN LAERHOVEN, Joost, 5000 AM Tilburg (NL); ROELOFFZEN, Erik, 5000 AM Tilburg (NL); VAN DEN BOER, Matijs, 5000 AM Tilburg (NL); DAS, Paul, 5000 AM Tilburg (NL); FRAMBACH, Luc, 5000 AM Tilburg (NL); BRANDSMA, Arjen, 5000 AM Tilburg (NL)
(74) Representative: Plevier, Gabriël Anton Johan Maria
(86) International application number: PCT/EP2019/025194
(87) International publication number: WO 2019/242893

(56) References cited:
- WO-A1-2015/059252
- JP-A- 2009 001 126
- US-B1- 6 344 008

## Description

The present invention relates to a hybrid powertrain as defined in claim 1, with a variable transmission, with an internal combustior engine, i.e. ICE, with an electric machine or motor/generator device, i.e. EM, and with a driven wheel. The transmission includes a variator unit and a first differential gearing. The variator unit is provided for varying a speed ratio between an input shaft and an output shaft of the variator unit within a range of speed ratios. Such variator unit is well known in the art, most commonly in the form of two rotatable, variable pulleys, each associated with (i.e. mounted on and is possibly partly formed integral with) a respective one of the said input and output shafts, and a drive belt or chain that is wrapped around the pulleys for drivingly connecting these. The first differential gearing is provided with three, relatively rotatable members that respectively drivingly connect to either the ICE, the EM or the driven wheel. The first differential gearing serves to combine and/or distribute mechanical power between these three components during operation of the hybrid powertrain. In particular, a differential gearing balances the torque levels acting on its rotatable members, based on the rotational speed ratios provided there between. Such first differential gearing is well known in the art, most commonly in the form of an epicyclic differential or planetary gearing with a central sun gear that meshes with several individually rotatable planetary gears that are collectively born by a carrier that is rotatable coaxially with the sun gear, which planetary gears in turn mesh with a ring gear that is likewise coaxially rotatable with the sun gear. The carrier of the planetary gearing is drivingly connected to, i.e. rotates as a unit with the driven wheel, whereas the sun gear and the ring gear are respectively drivingly connected to, i.e. rotate as a unit with either the ICE or the EM respectively.

Such a hybrid powertrain provides for several operation modes of the motor vehicle, such as a battery-powered EM drive mode, a gasoline-powered ICE drive mode, a combined ICE and EM, i.e. hybrid drive mode, an EM brake energy recuperation, i.e. generation mode, an ICE to EM battery charge mode etc.

It is noted that, the variable transmission is additionally provided with a final reduction gearing including a further differential gearing between the first differential gearing and the driven wheel, such that two driven wheels of the motor vehicle can be simultaneously driven at different rotational speeds. Moreover, a first clutch is preferably provided in the variable transmission to be able to lock a least two of the three members of the first differential gearing together, making all three such members rotate as a unit and thus providing a fixed-ratio drive connection between the EM and the driven wheel. Further, a second clutch is preferably provided in the variable transmission to be able to selectively couple, i.e. to selectively drivingly connect the ICE and the planetary gearing together, or to decouple these components from one another.

The above-described transmission is for example known from EP 0 941 883 A3 and US 6,054,776, at least in general. In both these known transmission designs, the variator unit is arranged between the planetary gearing and the driven wheel. The present invention, however, specifically relates and is limited to a transmission design wherein the variator unit is arranged between the planetary gearing and the ICE. This latter transmission design is for example known from US 6,344,008 B1 and WO 2015/059252 A1.

The known transmission has the drawback that it requires considerable installation space, i.e. occupies a relatively large volume, because the variator unit is fitted between the ICE and the planetary gearing, which planetary gearing -in turn- being fitted between the EM and the driven wheels. The present invention aims to mitigate such drawback and to provide for a favourably compact transmission design.

According to the present invention, the physical arrangement of the transmission's main components is considered separately from the above-described functional arrangement thereof. For example JP 2009 001126 A considers such a physical arrangement, however, in relation to a transmission that does not include the said first differential gearing. In the JP 2009 001126 transmission arrangement:
- the EM is located above the input and output shafts of the variator unit as seen in the vertical direction when the transmission is mounted in the motor vehicle;
- an output, i.e. pinion gear on a rotor shaft of the EM is located on the same axial side of the variator unit as the ICE, i.e. on the axial side of the input shaft of the variator unit that is attached to a crankshaft of the ICE; and
- the output shaft of the variator unit is arranged coaxial with the driven wheel of the motor vehicle.

Similarly, the present invention aims to provide a physical arrangement of the transmission components including the said first differential gearing, which arrangement requires only a minimal installation space, not only in an axial direction, i.e. horizontally when mounted, but also perpendicular thereto, in particular vertically when mounted. According to the present invention, the variator unit is oriented at an angle relative to the horizontal direction with its output shaft being located somewhat higher than its input shaft. Hereby, the final reduction gearing can be favourably accommodated below the variator unit, i.e. in particular such that output shafts thereof are favourably located at a similar height as the axes of rotation of the driven wheels.

Preferably according to the present invention, for also requiring a minimal installation space perpendicular to the axial direction in the horizontal plane, i.e. in a width direction, the rotor shaft of the EM is preferably located between the input shaft and the output shaft of the variator unit as seen in that width direction. In other words, the rotor shaft of the EM is located between two (imaginary/virtual) vertical planes that each intersect a respective shaft of the variator unit.

Preferably according to the present invention, an output gear on the output shaft of the variator unit can be favourably incorporated in the transmission, which output gear provides a speed reduction from the variator unit to the planetary gearing located there below. This latter speed reduction is desired to optimise the utilisation and, more in particular, the torque delivery of the ICE during operation of the hybrid powertrain. Moreover, such output gear enables a favourably compact transmission design, i.e. with minimal installation space, because the planetary gearing can thereby be arranged off-axis relative to the output shaft of the variator unit. In particular, by the thus provided flexibility in the placement of the planetary gearing, an idler gear can be optimally incorporated in the transmission between, i.e. as part of the driving connection between the EM and the planetary gearing, essentially irrespective of the speed reduction that is required therefor. In this respect, it is worth noting that the speed reduction of this latter driving connection and thus a diameter of the idler gear relative to the EM pinion gear can be relatively large. In particular, depending on a rotational speed range of the EM in question, a speed reduction ratio of 3:1 up to 4:1 or even more can be optimal in this respect. This speed reduction is desired to optimise the utilisation and, more in particular, the torque delivery of the EM during operation of the hybrid powertrain.

According to the present invention, by additionally locating a central axis of the planetary gearing, i.e. an axis of rotation thereof, below the (central axis of rotation of the) input and output shafts of the variator unit as seen in the vertical direction, a relatively large idler gear can be favourably incorporated in the transmission between the EM and either the sun gear or the ring gear of the planetary summation gear. The idler gear serves to bridge the distance in the vertical direction between the EM the planetary gearing, and can help to accommodate the said, relatively large, speed reduction ratio from the EM to the planetary gearing.

In a preferred embodiment of the transmission in terms of the said physical arrangement of its main components, the planetary gearing is located on the same axial side of the variator unit as the pinion gear of the EM, whereas the output shaft of the variator unit is located on the opposite axial side thereof. By this arrangement, gear trains that are located between, i.e. that drivingly connect the rotor shaft of the EM and the output shaft of the variator unit to the planetary gearing respectively, are favourably located on opposite axial sides of the variator unit. Hereby, the installation space is used very effectively. Moreover, an output of the transmission that is provided by the a final reduction is favourably located at the axial side of the transmission that faces the ICE, such that drive shafts extending from the a final reduction gearing to the driven wheels in the hybrid powertrain are of similar length, as is generally preferred.

More specifically in this preferred embodiment, an auxiliary gear associated with an auxiliary shaft is incorporated in the transmission, which auxiliary gear meshes with the output gear of the variator unit and which auxiliary shaft is coaxial with and drivingly connects to, i.e. rotates as a unit with either the sun gear or the ring gear of the planetary gearing. Preferably, the auxiliary gear is provided with a central opening with the auxiliary shaft extending through such opening, with the said second clutch arranged between the auxiliary shaft and the auxiliary gear on the axial side thereof that faces away from the planetary gearing. In this case, preferably, a radial bearing is fitted on, i.e. around the auxiliary shaft and inside the central opening of the auxiliary gear. These latter, preferred embodiments, further reduce the required installation space of the transmission. For example, the output shaft of the variator unit does not interfere with the second clutch that can thus be optimally incorporated in the transmission. In particular, the second clutch can be provided with a relatively large diameter, favourably reducing the number of sets of friction plates required in a plate clutch and/or favourably enabling a cone clutch to be applied instead. Moreover, when the second clutch is opened during operation of the hybrid powertrain, i.e. when the variator unit is decoupled from the planetary gearing so that the ICE can be stopped/switch-off, also the auxiliary gear and the output gear are decoupled and favourably stop rotating as well.

Even more specifically in this latter preferred embodiment, the ring gear of the planetary gearing is preferably drivingly connected to the EM, e.g. by meshing with the said idler gear, and the sun gear of the planetary gearing is preferably drivingly connected to the ICE, e.g. by being as part of, mounted on or otherwise attached to the auxiliary shaft. Additionally in this case, the carrier of the planetary gearing is preferably located on the same axial side of the planetary gearing as the auxiliary gear, with the auxiliary shaft extending through a central opening of the carrier. By this latter measure, the final reduction gearing that is drivingly connected to the carrier, is optimally positioned in the axial direction, essentially midway between the drive wheels, at least in case the ICE is transversely mounted in the motor vehicle.

If, alternatively, the ring gear of the planetary gearing is drivingly connected to the ICE and the sun gear of the planetary gearing is drivingly connected to the EM, then the EM is still located above the input and output shafts of the variator unit as seen in the vertical direction and the pinion gear on the rotor shaft of the EM is still located on the same axial side of the variator unit as the ICE. However, in this case, it can be opted to locate the planetary gearing on the opposite axial side of the variator unit as the pinion gear of the EM instead. Moreover, the auxiliary shaft extends from the planetary gearing, where it carries or at least rotates as a unit with the sun gear, to the other axial side of the variator unit, where it is drivingly connected to the electric machine via one more auxiliary and/or idles gears. Additionally in this case, the carrier of the planetary gearing is preferably provided with a central opening where through the auxiliary shaft extends.

The variable transmission according to the present invention is explained in more detail hereinafter by means of non-limiting, illustrative embodiments thereof and with reference to the drawing, in which:
- figure 1 is a schematic representation of the functional arrangement of the main components of a specific type hybrid powertrain provided with a transmission;
- figure 2 provides a 3D model of a physical arrangement of the internal components of the transmission in accordance with the present invention as seen in two different directions;
- figure 3 is a schematic, partial side elevation of the physical transmission arrangement of figure 2, illustrating a specific aspect thereof;
- figure 4 provides a schematic representation of another specific aspect of the physical transmission arrangement of figure 2;
- figure 5 provides a schematic representation of another transmission arrangement;
- figure 6 provides a detail of a part of the transmission arrangement of figure 5;
- figure 7 provides a schematic representation of another transmission arrangement; and
- figure 8 provides a schematic representation of yet another transmission arrangement.

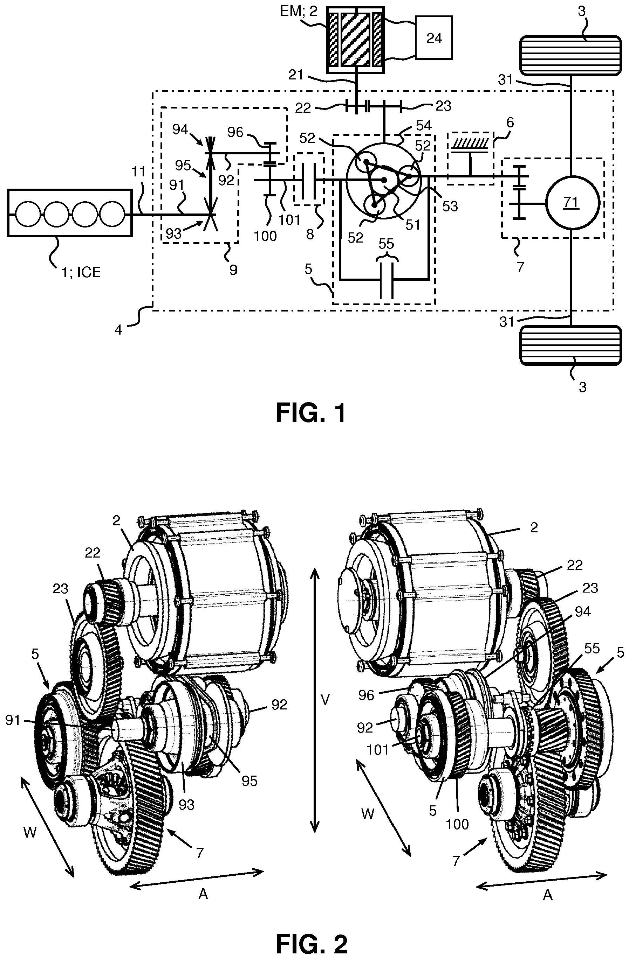

Figure 1 shows a hybrid powertrain for a motor vehicle such as a passenger car. In such shown functional arrangement thereof, the hybrid powertrain comprises an internal combustion engine, i.e. ICE 1, with a crankshaft 11, an electric machine, i.e. EM 2, with a rotor shaft 21, two driven wheels 3 with wheel shafts 31 and with a variable transmission 4 there between. The known transmission 4 comprises a variator unit 9 and a first differential gearing 5. The variator unit 9 is provided with an input shaft 91 that is drivingly connected to, i.e. that rotates as a unit with the ICE 1 and with an output shaft 92. The variator unit 9 can vary a speed ratio between an input shaft 91 and an output shaft 92 thereof within a continuous range of speed ratios.

In the illustrative embodiment thereof in figure 1, the variator unit 9 is in the form of two rotatable, variable pulleys 93 and 94, each associated with (i.e. mounted on and is possibly partly formed integral with) a respective one of the said input and output shafts 91 and 92, and a drive belt or chain 95 that is wrapped around the pulleys 93 and 94 for drivingly connecting these.

The first differential gearing 5 is provided with three rotatable members 51, 54, 53 that are respectively drivingly connected to, i.e. rotate as a unit with the output shaft 92 of the variator unit 9, the rotor shaft 21 of the EM 2 and the wheel shafts 31 of the driven wheels 3. The first differential gearing 5 balances the torque levels acting on its rotatable members 51, 54, 53, based on the rotational speed ratios provided there between.

In the illustrative embodiment thereof in figure 1, the first differential gearing 5 is in the form of a planetary gearing 5 provided with a central sun gear 51 that is in meshing contact with one or more planet gears 52, which planet gears 52 are rotatably carried by a planet carrier 53 arranged coaxially rotatable with the sun gear 51, and with a ring gear 54 that is in meshing contact with the planet gears 52 and that is also arranged coaxially rotatable with the sun gear 51. A bridging clutch 55 is provided as part of planetary gearing 5, between the planet carrier 53 and sun gear 51 thereof. This bridging clutch 55 can be closed to internally lock the planetary gearing 5 such that the sun gear 51, the planet carrier 53 and the ring gear 54 thereof rotate as a unit.

The sun gear 51 of the planetary gearing 5 is coupled to the crankshaft 11 of the ICE 1 via a second clutch 8, an auxiliary gear 100 on an auxiliary shaft 101, an output gear 96 on the output shaft 92 meshing with that auxiliary gear 100 and the variator unit 9 itself. The second clutch can be selectively closed to drivingly connecting, i.e. to couple the ICE 1 and the variator unit 9 to the planetary gearing 5, or opened to decouple, i.e. to isolate the ICE 1 and the variator unit 9 from the rest of the hybrid powertrain. The ring gear 54 of the planetary gearing 5 is coupled to a pinion gear 22 on the rotor shaft 21 of the EM machine 2 via an idler gear 23 and the planet carrier 53 of the planetary gearing 5 is coupled to the driven wheels 3 via a final reduction gearing 7 including a further differential gearing 71. The final reduction gearing 7 provides a speed reduction between the ICE 1 and/or the EM 2 and the driven wheels 3, while the further differential gearing 71 thereof allows the two driven wheels 3 to each rotate at a respective rotational speed, as is common knowledge in the art.

The transmission 4 is provided with a brake or park lock 6 that can be engaged to lock, i.e. to prevent rotation of the final reduction gearing 7, in which case the ICE 1 can drive the EM 2, in particular to charge a battery 24 of the motor vehicle, or the EM 2 can drive the ICE 1, in particular to start it, without simultaneously driving and/or rotating the driven wheels 3 of the motor vehicle. When the park lock 6 is released, the EM 2 can drive the motor vehicle while drawing electric power from the battery 24, possibly supported by the ICE 1. Instead of the park lock 6 it is of course also possible to (automatically) engage the vehicle wheel brakes to charge the battery 24 without simultaneously driving the vehicle.

Further technical details of this particular type of hybrid powertrain, as well as the specific benefits and operations thereof, are described in the Dutch patent NL1042199.

According to the present invention, it is generally to be preferred that the transmission 4 occupies only a relatively small installation space. Figure 2 provide such a preferred embodiment of the transmission 4 by the physical arrangement of the main components thereof in accordance with the present invention in two 3D views thereof and relative to a mounted position thereof in the motor vehicle.

The transmission 4 of figure 2 incorporates the following design features in accordance with the present invention that provide for a compact physical realisation thereof:
- the EM 2 is located above the input shaft 91 and the output shaft 92 of the variator unit 9 as seen in a vertical direction V;
- the pinion gear 22 of the EM 2 is located on the same side of the variator unit 9 as the input shaft 91 thereof relative to an axial direction A;
- the rotor shaft 21 of the EM 2 is located between the input shaft 91 and the output shaft 92 of the variator unit 9 in a width direction W;
- the planetary gearing 5 is located on the same side of the variator unit 9 as the pinion gear 22 of the EM 2 relative to the axial direction A,
- the idler gear 23 drivingly connecting the planetary gearing 5 to the EM 2 and the auxiliary gear 100 drivingly connecting the planetary gearing 5 to the ICE 1 (via the variator unit 9) are mounted on mutually opposite sides of the variator unit 9 relative to the axial direction A.

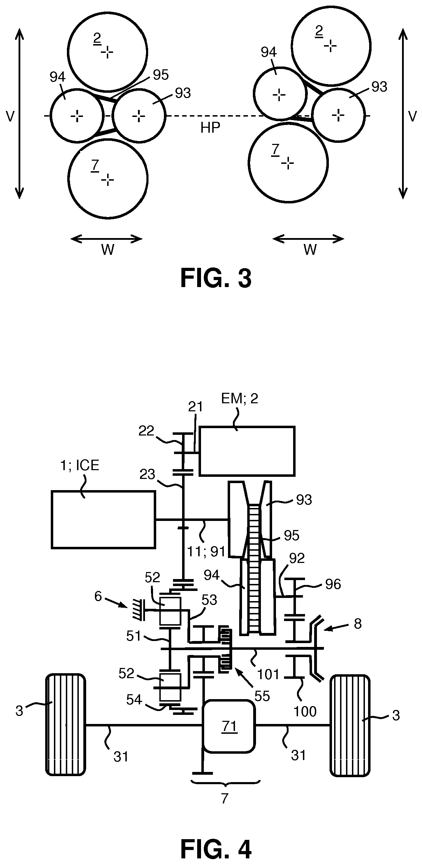

Figure 3 elucidates a further design aspect of the novel physical transmission arrangement of figure 2. Figure 3 shows two instances of a mutual positioning of four transmission components, namely the EM 2, the variator unit input pulley 93, the variator unit output pulley and the final reduction gearing 7, and then only schematically in a side elevation of thereof. On the left side of figure 3, in contrast to the invention as defined in claim 1, the input pulley 93 and the output pulley lie in the same horizontal plane HP that is defined by the said width and axial directions. On the right side of figure 3, however, in accordance with the invention, the variator unit 9 is oriented at an angle relative to the horizontal plane HP by an axis of rotation of its output shaft 92 being located higher than that of its input shaft 91 in the vertical direction V, which latter mutual positioning corresponds to that of the figure 2. From figure 3, it appears that such angled orientation of the variator unit 9 significantly reduces the installation space required for the said transmission components in the vertical direction V, albeit at the expense of the somewhat increased installation space in the width direction W. In particular, by such angled orientation of the variator unit 9 and by locating the EM 2 closer to the axis of rotation of the input pulley 93 than to the axis rotation of the output pulley 94 in the width direction W, the EM 2 can also be located lower in the vertical direction.

It is noted that in the present transmission arrangement the speed ratio range of the variator unit 9 can be comparatively limited, since the total speed ratio range of the transmission 4 is extended by the planetary gearing 5. A so-called ratio coverage (defined as the largest achievable speed ratio divided by the smallest achievable speed ratio) of the variator unit 9 needs to be between 3.0 and 4.5 only, compared to around 7.0 in a more conventional transmission arrangement without the planetary gearing 5. This latter aspect too helps to reduce the required installation space and, in particular, enables to take full advantage of the angled orientation of the variator unit 9 in this respect.

Moreover, by locating the final reduction gearing 7 closer to the axis of the output pulley 94 than to the axis of the input pulley 93 in the width direction W, the final reduction gearing 7 can also be located higher in the vertical direction. As a result, a diagonal distance between the axis of rotation of the input shaft 91 of the variator unit 9, which corresponds to the axis of rotation of the crank shaft 11 of the ICE 1, and that of the final reduction gearing 7 is remarkably reduced. Such reduction is considered highly advantageous, since especially this diagonal distance typically determines -and set a minimum for- the installation space required for the so-called engine bay of the motor vehicle.

Although not shown in figure 3, the final reduction gearing 7 can -and, in the transmission arrangement of figure 2, does- partially overlap with the output pulley 94 in the vertical direction. For the EM 2 a corresponding vertical overlap with the input pulley 93 is, however, not possible due to its considerable size in the axial direction. In this case too, in order to further optimise the overall installation space of the transmission 4, the axis of rotation of the EM 2, i.e. of its rotor shaft 21, is located close to, but still on the same side of the axis of the input pulley 93, i.e. the input shaft 91, at the axis of the output pulley 94, i.e. the output shaft 92.

Figure 4 illustrates yet a further design aspect of the novel physical transmission arrangement of figure 2 in a schematically drawn, physical arrangement thereof. In particular in figure 4, the auxiliary gear 100 is provided with a central opening, with the auxiliary shaft 101 extending through such opening, and with the said second clutch 8 embodied as a friction clutch and arranged between the auxiliary shaft 101 and the auxiliary gear 100 on the axial side thereof that faces away from the planetary gearing 5; 51-54. As a result, the said second clutch 8 interferes neither with the variator output shaft 92, nor with the auxiliary shaft 101. Therefore, the said second clutch 8 can favourably be provided with a relatively large diameter.

Alternatively, but not illustrated, the said second clutch 8 can be integrated in radial direction between the auxiliary shaft 101 and the auxiliary gear 100, which is feasible if the said second clutch 8 is embodied as a dry-friction, cone clutch. Indeed, the required slip-torque capacity of this clutch 8 is relatively low, because it does not serve as a starting clutch for the initial acceleration of the motor vehicle from standstill, but merely serves to start the ICE 1 when the operation of the transmission switches from a purely electric drive mode to a hybrid, i.e. ICE assisted drive mode.

Also in figure 4 the bridging clutch 55 is embodied as an interference clutch (also known as a dog clutch) that is favourably simple in construction and control as compared to a friction clutch. Of course, in this case, the torque and speed of the components 51-54 of the planetary gearing 5 is equalised (by the appropriate control of the ICE 1, the EM 2 and the variator unit 9.

Further, in figure 4 the carrier 53 of the planetary gearing 5; 51-54 is incorporated in the transmission 4 on the axial side of the planet gears 52 facing away from the ICE 1 and as a hollow gear provided with a central opening, with the auxiliary shaft 101 extending through it. As a result, the final reduction gearing 7 that is drivingly connected to the carrier 53 is optimally positioned in axial direction relative to the driven wheels 3.

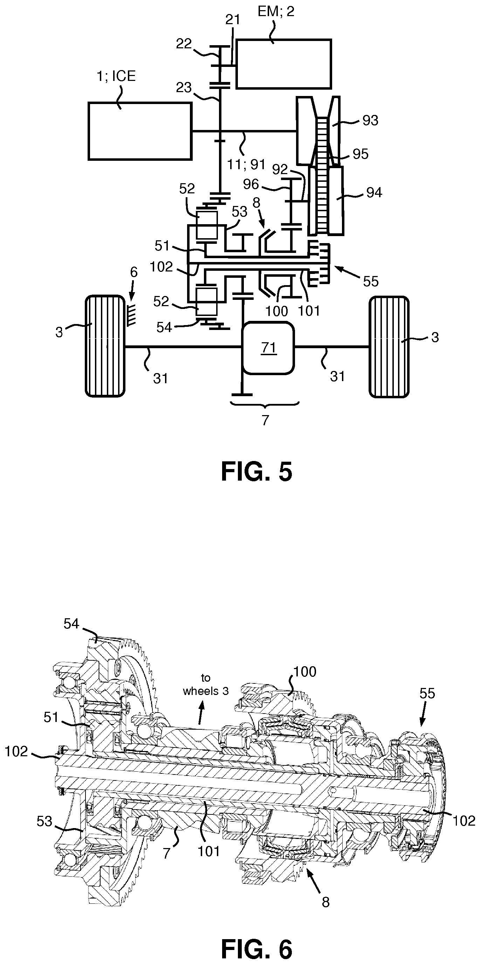

Figure 5 illustrates an alternative arrangement of the novel transmission. In this alternative transmission arrangement, the said second clutch 8 is arranged on the auxiliary shaft 101 between the bridging clutch 55 and the planetary gearing 5; 51-54 that are arranged on the respective ends of that auxiliary shaft 101. A connecting shaft 102 is provided between the bridging clutch 55 and the planetary gearing 5; 51-54. The connecting shaft 102 is provided coaxially with the auxiliary shaft 101, whereto the latter is embodied as a hollow shaft with a central opening, with the connection shaft 102 extending through it. An advantage of this particular arrangement is that the bridging clutch 55 and the planetary gearing 5; 51-54 are provided on either end of the auxiliary shaft 101 and the connecting shaft 102, such that any (torque) shocks resulting from a closing or opening of the bridging clutch 55 are dampened by a twisting of these shafts 101, 102. Such dampening effect can be enhanced by providing the connecting shaft 102 as a hollow shaft over at least a substantial part of its length. However, preferably, the connecting shaft 102 is provided as a hollow shaft over a predominant part of its length, as illustrated in figure 6.

The alternative arrangement of the transmission 4 of figure 5 is particularly suitable if the said second clutch 8 has a relatively small diameter, such as when it is integrated in radial direction between the auxiliary shaft 101 and the auxiliary gear 100 as mentioned hereinabove. In this case a favourably compact build of the transmission 4 can be achieved, both in the axial direction and in the height/radial direction.

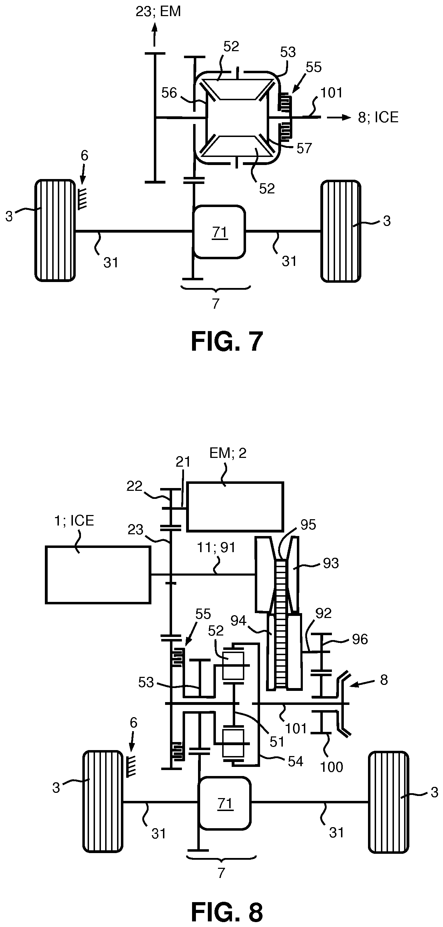

In the figures 1 to 6, the first differential gearing 5 of the transmission 4 is embodied as a planetary gearing 5 whereof the sun gear 51 is driven by the ICE 1 and the ring gear 54 is driven by (or drives) the EM 2. This specific embodiment of the first differential gearing 5 is particularly suited for a powerful EM 2 with a high (maximum) torque generating capability, in particular exceeding the maximum torque of the ICE 1, e.g. by more than 25%. However, if the maximum EM torque is comparable to, or less than the maximum ICE torque, it is preferable to either embody the first differential gearing 5 with two side gears 56, 57 of equal diameter, as schematically illustrated in figure 7, or to arrange it as a planetary gearing 5 with the ICE 1 driving the ring gear 54 and with the EM 2 driving (or being driven by) the sun gear 51, as schematically illustrated in figure 8. In either one of such alternative transmission embodiments, the EM 2 is still located above the input and output shafts 91, 92 of the variator unit 9 as seen in the vertical direction and the pinion gear 22 on the rotor shaft 21 of the EM 2 is still located on the same axial side of the variator unit 9 as the ICE 1.

In the embodiment of figure 8 thereof, the carrier 53 of the planetary gearing 5 is incorporated in the transmission 4 on the axial side of the planet gears 52 facing towards the ICE 1 and is embodied as a hollow gear provided with a central opening, with a shaft of the sun gear 51 extending through it. As a result, the final reduction gearing 7 that is drivingly connected to the carrier 53 is optimally positioned in axial direction relative to the driven wheels 3 in this latter transmission embodiment as well.

The invention is not limited to the embodiments and/or the examples that are explicitly mentioned herein, but Z is defined in the appended claims.

## Claims

1. A hybrid powertrain, in particular for a motor vehicle, with an internal combustion engine (1) comprising a crankshaft (11), with an electric machine (2) comprising a rotor shaft (21) with a pinion gear (22), with a driven wheel (3) and with a variable transmission (4) provided there between, which variable transmission (4) includes a variator unit (9) with an input shaft (91) and an output shaft (92), whereof the input shaft (91) is intended to be driven by the internal combustion engine (1), for varying a transmission ratio between these shafts (91, 92), which variable transmission (4) further includes a differential gearing (5), which differential gearing (5) is provided with three rotatable members (51, 54, 53) that are respectively drivingly connected to, i.e. that rotate as a unit with a respective one of the output shaft (92) of the variator unit (9), the rotor shaft (21) of the electric machine (2) and, via a final reduction gearing (7) of the variable transmission (4) including a further differential gearing (71), the driven wheel (3), **characterized in that**, the rotor shaft (21) of the electric machine (2) is located above the input shaft (91) and the output shaft (92) of the variator unit (9) in vertical direction, **in that** the pinion gear (22) of the electric machine (2) is located on the same side of the variator unit (9) as the input shaft (91) thereof in axial direction and **in that** the variator unit (9) is oriented under an angle with the horizontal plane with its output shaft (92), or at least the axis of rotation thereof, being located above its input shaft (91), or at least the axis of rotation thereof, in vertical direction.

2. The hybrid powertrain according to the claim 1, **characterized in that** the rotor shaft (21), or at least the axis of rotation thereof, is located between the input shaft (91) and the output shaft (92) of the variator unit (9), or at least the axes of rotation thereof in a direction perpendicular to both the axial and the vertical directions.

3. The hybrid powertrain according to the claim 1 or 2, **characterized in that** a central axis of rotation of the differential gearing (5) is located below the variator unit (9) in vertical direction.

4. The hybrid powertrain according to a preceding claim, **characterized in that** an idler gear (23) is included therein between the pinion gear (22) of the electric machine (2) and the differential gearing (5).

5. The hybrid powertrain according to a preceding claim, **characterized in that** the differential gearing (5) is located on the same side of the variator unit (9) as the pinion gear (22) of the electric machine (2) in axial direction, **in that** the output shaft (92) of the variator unit (9) is provided with a an output gear (96), **in that** the output gear (96) is located on the opposite side of the variator unit (9) as the input shaft (92) thereof in axial direction and **in that** between the variator unit (9) and the differential gearing (5) the variable transmission (4) is provided with an auxiliary gear (100), with an auxiliary shaft (101) and with a releasable clutch (8), which auxiliary gear (100) meshes with the output gear (96) of the variator unit (9) and which releasable clutch (8) is arranged between the auxiliary gear (100) and the auxiliary shaft (101) that is connected to the differential gearing (5).

6. The hybrid powertrain according to the claim 5, **characterized in that** the releasable clutch (8) is located on the side of the auxiliary gear (100) that faces away from the variator unit (9), **in that** the auxiliary gear (100) is provided with a central opening and **in that** the auxiliary shaft (101) extends through that central opening of the auxiliary gear (100).

7. The hybrid powertrain according to one of the claims 1-4, **characterized in that** the differential gearing (5) is located on the same side of the variator unit (9) as the pinion gear (22) of the electric machine (2) in axial direction, **in that** the output shaft (92) of the variator unit (9) is provided with a an output gear (96), **in that** the output gear (96) is located on the same side of the variator unit (9) as the input shaft (92) thereof in axial direction and **in that** between the variator unit (9) and the differential gearing (5) the variable transmission (4) is provided with an auxiliary gear (100), with an auxiliary shaft (101) connected to the differential gearing (5) and with a releasable clutch (8), which auxiliary gear (100) meshes with the output gear (96) of the variator unit (9) and which releasable clutch (8) is arranged between the auxiliary gear (100) and the auxiliary shaft (101).

8. The hybrid powertrain according to the claim 7, **characterized in that** the differential gearing (5) is provided with a bridging clutch (55) between the auxiliary shaft (101) and a further, connecting shaft (102) that is also connected to the differential gearing (5), which bridging clutch (55) is capable of internally locking the differential gearing (5) and which bridging clutch (55) is located on the side of the auxiliary gear (100) that faces away from the differential gearing (5), **in that** the auxiliary gear (100) is provided with a central opening and **in that** the auxiliary shaft (101) and the connecting shaft (102) extend through that central opening of the auxiliary gear (100).

9. The hybrid powertrain according to the claim 8, **characterized in that** the auxiliary shaft (101) is embodied as a hollow shaft with the connection shaft 102 extending through it.

10. The hybrid powertrain according to a preceding claim, **characterized in that** the differential gearing (5) is embodied as a planetary gearing (5) with a central sun gear (51) that meshes with several individually rotatable planetary gears (52) that are collectively born by a carrier (53) that is rotatable coaxially with the sun gear (51), which planetary gears (52) in turn mesh with a ring gear (54) that is likewise coaxially rotatable with the sun gear (51).

11. The hybrid powertrain according to the claim 10, **characterized in that** the carrier (53) of planetary gearing (5) is drivingly connected to, i.e. rotate as a unit with the driven wheel (3), **in that** the sun gear (51) of the planetary gearing (5) is drivingly connected to, i.e. rotate as a unit with the internal combustion engine (1), **in that** the ring gear (54) of the planetary gearing (5) is drivingly connected to, i.e. rotate as a unit with the electric machine (2) and **in that**, during operation of the hybrid powertrain, a first drive torque that can maximally be generated by the electric machine (2) on the ring gear (54) is higher than a second drive torque that can maximally be generated by the internal combustion engine (1) on the sun gear (51).

12. The hybrid powertrain according to the claim 10, **characterized in that** the carrier (53) of planetary gearing (5) is drivingly connected to, i.e. rotate as a unit with the driven wheel (3), **in that** the sun gear (51) of the planetary gearing (5) is drivingly connected to, i.e. rotate as a unit with the electric machine (2), **in that** the ring gear (54) of the planetary gearing (5) is drivingly connected to, i.e. rotate as a unit with the internal combustion engine (1) and **in that**, during operation of the hybrid powertrain, a first drive torque that can maximally be generated by the internal combustion engine(1) on the ring gear (54) is higher than a second drive torque that can maximally be generated by the electric machine (2) on the sun gear (51).

13. The hybrid powertrain according to the claim 11 or 12, **characterized in that** the said first drive torque is at least 15% larger and preferably is at least 25% than the said second drive torque.

14. The hybrid powertrain according to one of the claims 1-9, **characterized in that** two of the said three rotatable members (51, 54, 53) of the differential gearing (5) are embodied as two side gears (56, 57) of equal diameter that are respectively drivingly connected to, i.e. rotate as a unit with the internal combustion engine (1) and the electric machine (2) and that are both in meshing contact with several individually rotatable planetary gears (52) that are collectively born by a carrier (53) that is drivingly connected to, i.e. rotate as a unit with the driven wheel (3), and **in that**, during operation of the hybrid powertrain, a drive torque that can maximally be generated by the internal combustion engine(1) on one (57) of the side gears (56, 57) and a drive torque that can maximally be generated by the electric machine (2) on the other one (56) of the side gears (56, 57) correspond to one another within a margin of 25%, preferably within a margin of 15%.

## Patentansprüche

1. Hybridantrieb, insbesondere für eine Kraftfahrzeug, mit einer Brennkraftmaschine (1), die eine Kurbelwelle (11) umfasst, mit einer elektrischen Maschine (2), die eine Rotorwelle (21) mit einem Ritzel (22) umfasst, mit einem angetriebenen Rad (3) und mit einem dort dazwischen bereitgestellten variablen Getriebe (4), wobei das variable Getriebe (4) eine Variatoreinheit (9) mit einer Eingangswelle (91) und einer Ausgangswelle (92) umfasst, wobei die Eingangswelle (91) dazu vorgesehen ist, durch die Brennkraftmaschine (1) angetrieben zu werden, zum Variieren eines Übersetzungsverhältnisses zwischen den Wellen (91, 92), wobei das variable Getriebe (4) ferner ein Differenzialgetriebe (5) umfasst, wobei das Differenzialgetriebe (5) mit drei drehbaren Elementen (51, 54, 53) versehen ist, die jeweils antreibend verbunden sind mit, d. h. die sich als eine Einheit drehen hinsichtlich einem der Ausgangswelle (92) der Variatoreinheit (9), der Rotorwelle (21) der elektrischen Maschine (2) und, über ein finales Untersetzungsgetriebe (7) des variablen Getriebes (4), das ein weiteres Differenzialgetriebe (71) umfasst, des angetriebenen Rads (3), **dadurch gekennzeichnet, dass** die Rotorwelle (21) der elektrischen Maschine (2) in einer vertikalen Richtung über der Eingangswelle (91) und der Ausgangswelle (92) der Variatoreinheit (9) angeordnet ist, dadurch, dass das Ritzel (22) der elektrischen Maschine (2) in einer axialen Richtung auf derselben Seite der Variatoreinheit (9) wie die Eingangswelle (91) davon angeordnet ist, und dadurch, dass die Variatoreinheit (9) unter einem Winkel mit der horizontalen Ebene mit ihrer Ausgangswelle (92) oder zumindest der Drehachse davon angeordnet ist, die in einer vertikalen Richtung über ihrer Eingangswelle (91) oder zumindest der Drehachse davon angeordnet ist.

2. Hybridantrieb nach Anspruch 1, **dadurch gekennzeichnet, dass** die Rotorwelle (21) oder zumindest die Drehachse davon zwischen der Eingangswelle (91) und der Ausgangswelle (92) der Variatoreinheit (9) oder zumindest den Drehachsen davon in einer Richtung senkrecht zu sowohl der axialen als auch der vertikalen Richtung angeordnet ist.

3. Hybridantrieb nach Anspruch 1 oder 2, **dadurch gekennzeichnet, dass** eine zentrale Drehachse des Differenzialgetriebes (5) in einer vertikalen Richtung unterhalb der Variatoreinheit (9) angeordnet ist.

4. Hybridantrieb nach einem vorhergehenden Anspruch, **dadurch gekennzeichnet, dass** ein Zwischenzahnrad (23) darin zwischen dem Ritzel (22) der elektrischen Maschine (2) und dem Differenzialgetriebe (5) enthalten ist.

5. Hybridantrieb nach einem vorhergehenden Anspruch, **dadurch gekennzeichnet, dass** das Differenzialgetriebe (5) in einer axialen Richtung auf derselben Seite der Variatoreinheit (9) wie das Ritzel (22) der elektrischen Maschine (2) angeordnet ist, dadurch, dass die Ausgangswelle (92) der Variatoreinheit (9) mit einem Ausgangszahnrad (96) versehen ist, dadurch, dass das Ausgangszahnrad (96) in einer axialen Richtung auf der entgegengesetzten Seite der Variatoreinheit (9) wie die Eingangswelle (92) davon angeordnet ist, und dadurch, dass zwischen der Variatoreinheit (9) und dem Differenzialgetriebe (5) das variable Getriebe (4) mit einem Nebenzahnrad (100), mit einer Nebenwelle (101) und mit einer lösbaren Kupplung (8) versehen ist, wobei das Nebenzahnrad (100) mit dem Ausgangszahnrad (96) der Variatoreinheit (9) in Eingriff kommt und wobei die lösbare Kupplung (8) zwischen dem Nebenzahnrad (100) und der Nebenwelle (101) angeordnet ist, die mit dem Differenzialgetriebe (5) verbunden ist.

6. Hybridantrieb nach Anspruch 5, **dadurch gekennzeichnet, dass** die lösbare Kupplung (8) auf der Seite des Nebenzahnrads (100) angeordnet ist, die von der Variatoreinheit (9) abgewandt ist, dadurch, dass das Nebenzahnrad (100) mit einer zentralen Öffnung versehen ist, und dadurch, dass sich die Nebenwelle (101) durch die zentrale Öffnung des Nebenzahnrads (100) erstreckt.

7. Hybridantrieb nach einem der Ansprüche 1-4, **dadurch gekennzeichnet, dass** das Differenzialgetriebe (5) in einer axialen Richtung auf derselben Seite der Variatoreinheit (9) wie das Ritzel (22) der elektrischen Maschine (2) angeordnet ist, dadurch, dass die Ausgangswelle (92) der Variatoreinheit (9) mit einem Ausgangszahnrad (96) versehen ist, dadurch, dass das Ausgangszahnrad (96) in einer axialen Richtung auf derselben Seite der Variatoreinheit (9) wie die Eingangswelle (92) davon angeordnet ist, und dadurch, dass zwischen der Variatoreinheit (9) und dem Differenzialgetriebe (5) das variable Getriebe (4) mit einem Nebenzahnrad (100), mit einer Nebenwelle (101), die mit dem Differenzialgetriebe (5) verbunden ist, und mit einer lösbaren Kupplung (8) versehen ist, wobei das Nebenzahnrad (100) mit dem Ausgangszahnrad (96) der Variatoreinheit (9) in Eingriff kommt und wobei die lösbare Kupplung (8) zwischen dem Nebenzahnrad (100) und der Nebenwelle (101) angeordnet ist.

8. Hybridantrieb nach Anspruch 7, **dadurch gekennzeichnet, dass** das Differenzialgetriebe (5) mit einer Überbrückungskupplung (55) zwischen der Nebenwelle (101) und einer weiteren, verbindenden Welle (102) versehen ist, die auch mit dem Differenzialgetriebe (5) verbunden ist, wobei die Überbrückungskupplung (55) in der Lage ist, das Differenzialgetriebe (5) intern zu sperren, und wobei die Überbrückungskupplung (55) auf der Seite des Nebenzahnrads (100) angeordnet ist, die dem Differenzialgetriebe (5) abgewandt ist, dadurch, dass das Nebenzahnrad (100) mit einer zentralen Öffnung versehen ist, und dadurch, dass sich die Nebenwelle (101) und die verbindende Welle (102) durch die zentrale Öffnung des Nebenzahnrads (100) erstrecken.

9. Hybridantrieb nach Anspruch 8, **dadurch gekennzeichnet, dass** die Nebenwelle (101) als eine Hohlwelle ausgeführt ist, wobei sich die verbindende Welle 102 durch sie hindurch erstreckt.

10. Hybridantrieb nach einem vorhergehenden Anspruch, **dadurch gekennzeichnet, dass** das Differenzialgetriebe (5) als ein Planetengetriebe (5) mit einem zentralen Sonnenrad (51) ausgeführt ist, das mit mehreren einzeln drehbaren Planetenrädern (52) in Eingriff kommt, die gemeinsam durch einen Träger (53) getragen sind, der koaxial mit dem Sonnenrad (51) drehbar ist, wobei die Planetenräder (52) wiederum mit einem Hohlrad (54) in Eingriff kommen, das gleichermaßen koaxial mit dem Sonnenrad (51) drehbar ist.

11. Hybridantrieb nach Anspruch 10, **dadurch gekennzeichnet, dass** der Träger (53) des Planetengetriebes (5) antreibend verbunden ist mit, d. h. sich als eine Einheit dreht mit dem angetriebenen Rad (3), dadurch, dass das Sonnenrad (51) des Planetengetriebes (5) antreibend verbunden ist mit, d. h. sich als eine Einheit dreht mit der Brennkraftmaschine (1), dadurch, dass das Hohlrad (54) des Planetengetriebes (5) antreibend verbunden ist mit, d. h. sich als eine Einheit dreht mit der elektrischen Maschine (2), und dadurch, dass, während eines Betriebs des Hybridantriebs, ein erstes Antriebsmoment, das maximal durch die elektrische Maschine (2) an dem Hohlrad (54) erzeugt werden kann, höher ist als ein zweites Antriebsmoment, das maximal durch die Brennkraftmaschine (1) an dem Sonnenrad (51) erzeugt werden kann.

12. Hybridantrieb nach Anspruch 10, **dadurch gekennzeichnet, dass** der Träger (53) des Planetengetriebes (5) antreibend verbunden ist mit, d. h. sich als eine Einheit dreht mit dem angetriebenen Rad (3), dadurch, dass das Sonnenrad (51) des Planetengetriebes (5) antreibend verbunden ist mit, d. h. sich als eine Einheit dreht mit der elektrischen Maschine (2), dadurch, dass das Hohlrad (54) des Planetengetriebes (5) antreibend verbunden ist mit, d. h. sich als eine Einheit dreht mit der Brennkraftmaschine (1), und dadurch, dass, während eines Betriebs des Hybridantriebs, ein erstes Antriebsmoment, das maximal durch die Brennkraftmaschine (1) an dem Hohlrad (54) erzeugt werden kann, höher ist als ein zweites Antriebsmoment, das maximal durch die elektrische Maschine (2) an dem Sonnenrad (51) erzeugt werden kann.

13. Hybridantrieb nach Anspruch 11 oder 12, **dadurch gekennzeichnet, dass** das erste Antriebsmoment mindestens 15 % größer ist und vorzugsweise mindestens 25 % größer als das zweite Antriebsmoment ist.

14. Hybridantrieb nach einem der Ansprüche 1-9, **dadurch gekennzeichnet, dass** zwei der drei drehbaren Elemente (51, 54, 53) des Differenzialgetriebes (5) als zwei Kegelräder (56, 57) von gleichem Durchmesser ausgeführt sind, die jeweils antreibend verbunden sind mit, d. h. sich als eine Einheit drehen mit der Brennkraftmaschine (1) und der elektrischen Maschine (2) und die beide in eingreifendem Kontakt mit mehreren einzeln drehbaren Planetenrädern (52) sind, die gemeinsam durch einen Träger (53) getragen sind, der antreibend verbunden ist mit, d. h. sich als eine Einheit dreht mit dem angetriebenen Rad (3), und dadurch, dass, während eines Betriebs des Hybridantriebs, eine Antriebsmoment, das maximal durch die Brennkraftmaschine (1) an einem (57) der Kegelräder (56, 57) erzeugt werden kann, und ein Antriebsmoment, das maximal durch die elektrische Maschine (2) an dem anderen (56) der Kegelräder (56, 57) erzeugt werden kann, einander innerhalb eines Spielraums von 25 %, vorzugsweise innerhalb eines Spielraums von 15 %, entsprechen.

## Revendications

1. Groupe motopropulseur hybride, en particulier pour un véhicule motorisé, doté d'un moteur à combustion interne (1) comprenant un vilebrequin (11), doté d'une machine électrique (2) comprenant un arbre rotor (21) doté d'un engrenage à pignon (22), doté d'une roue entraînée (3) et doté d'une transmission variable (4) pourvue entre eux, laquelle transmission variable (4) inclut une unité variateur (9) dotée d'un arbre d'entrée (91) et d'un arbre de sortie (92), l'arbre d'entrée (91) étant destiné à être entraîné par le moteur à combustion interne (1), pour faire varier un rapport de transmission entre ces arbres (91, 92), laquelle transmission variable (4) inclut en outre un engrenage différentiel (5), lequel engrenage différentiel (5) est pourvu de trois éléments rotatifs (51, 54, 53) qui sont respectivement reliés en entraînement à, c'est-à dire qui tournent d'un seul tenant avec l'un respectif de l'arbre de sortie (92) de l'unité variateur (9), de l'arbre rotor (21) de la machine électrique (2) et, par le biais d'un engrenage réducteur final (7) de la transmission variable (4) incluant un autre engrenage différentiel (71), de la roue entraînée (3), **caractérisé en ce que** l'arbre rotor (21) de la machine électrique (2) est situé au-dessus de l'arbre d'entrée (91) et de l'arbre de sortie (92) de l'unité variateur (9) dans la direction verticale, **en ce que** l'engrenage à pignon (22) de la machine électrique (2) est situé du même côté de l'unité variateur (9) que l'arbre d'entrée (91) de celle-ci dans la direction axiale et **en ce que** l'unité variateur (9) est orientée sous un angle avec le plan horizontal avec son arbre de sortie (92), ou au moins l'axe de rotation de celui-ci, situé au-dessus de son arbre d'entrée (91), ou au moins de l'axe de rotation de celui-ci, dans la direction verticale.

2. Groupe motopropulseur hybride selon la revendication 1, **caractérisé en ce que** l'arbre rotor (21), ou au moins l'axe de rotation de celui-ci, est situé entre l'arbre d'entrée (91) et l'arbre de sortie (92) de l'unité variateur (9), ou au moins les axes de rotation de ceux-ci dans une direction perpendiculaire à la fois aux directions axiale et verticale.

3. Groupe motopropulseur hybride selon la revendication 1 ou 2, **caractérisé en ce qu'**un axe de rotation central de l'engrenage différentiel (5) est situé en dessous de l'unité variateur (9) dans la direction verticale.

4. Groupe motopropulseur hybride selon une revendication précédente, **caractérisé en ce qu'**un engrenage intermédiaire (23) est inclus dans celui-ci entre l'engrenage à pignon (22) de la machine électrique (2) et l'engrenage différentiel (5).

5. Groupe motopropulseur hybride selon une revendication précédente, **caractérisé en ce que** l'engrenage différentiel (5) est situé du même côté de l'unité variateur (9) que l'engrenage à pignon (22) de la machine électrique (2) dans la direction axiale, **en ce que** l'arbre de sortie (92) de l'unité variateur (9) est pourvu d'un engrenage de sortie (96), **en ce que** l'engrenage de sortie (96) est situé sur le côté de l'unité variateur (9) opposé à celui de l'arbre d'entrée (92) de celle-ci dans la direction axiale et **en ce qu'**entre l'unité variateur (9) et l'engrenage différentiel (5) la transmission variable (4) est pourvue d'un engrenage auxiliaire (100), doté d'un arbre auxiliaire (101) et doté d'un embrayage libérable (8), lequel engrenage auxiliaire (100) s'engrène avec l'engrenage de sortie (96) de l'unité variateur (9) et lequel embrayage libérable (8) est agencé entre l'engrenage auxiliaire (100) et l'arbre auxiliaire (101) qui est relié à l'engrenage différentiel (5).

6. Groupe motopropulseur hybride selon la revendication 5, **caractérisé en ce que** l'embrayage libérable (8) est situé sur le côté de l'engrenage auxiliaire (100) qui est orienté à l'opposé de l'unité variateur (9), **en ce que** l'engrenage auxiliaire (100) est pourvu d'une ouverture centrale et **en ce que** l'arbre auxiliaire (101) s'étend à travers cette ouverture centrale de l'engrenage auxiliaire (100).

7. Groupe motopropulseur hybride selon l'une des revendications 1 à 4, **caractérisé en ce que** l'engrenage différentiel (5) est situé du même côté de l'unité variateur (9) que l'engrenage à pignon (22) de la machine électrique (2) dans la direction axiale, **en ce que** l'arbre de sortie (92) de l'unité variateur (9) est pourvu d'un engrenage de sortie (96), **en ce que** l'engrenage de sortie (96) est situé du même côté de l'unité variateur (9) que l'arbre d'entrée (92) de celle-ci dans la direction axiale et **en ce qu'**entre l'unité variateur (9) et l'engrenage différentiel (5) la transmission variable (4) est pourvue d'un engrenage auxiliaire (100), doté d'un arbre auxiliaire (101) relié à l'engrenage différentiel (5) et doté d'un embrayage libérable (8), lequel engrenage auxiliaire (100) s'engrène avec l'engrenage de sortie (96) de l'unité variateur (9) et lequel embrayage libérable (8) est agencé entre l'engrenage auxiliaire (100) et l'arbre auxiliaire (101).

8. Groupe motopropulseur hybride selon la revendication 7, **caractérisé en ce que** l'engrenage différentiel (5) est pourvu d'un embrayage de pontage (55) entre l'arbre auxiliaire (101) et un autre arbre de liaison (102) qui est également relié à l'engrenage différentiel (5), lequel embrayage de pontage (55) est apte à bloquer de manière interne l'engrenage différentiel (5) et lequel embrayage de pontage (55) est situé sur le côté de l'engrenage auxiliaire (100) qui est orienté à l'opposé de l'engrenage différentiel (5), **en ce que** l'engrenage auxiliaire (100) est pourvu d'une ouverture centrale et **en ce que** l'arbre auxiliaire (101) et l'arbre de liaison (102) s'étendent à travers cette ouverture centrale de l'engrenage auxiliaire (100).

9. Groupe motopropulseur hybride selon la revendication 8, **caractérisé en ce que** l'arbre auxiliaire (101) est mis en œuvre comme un arbre creux avec l'arbre de liaison 102 s'étendant à travers celui-ci.

10. Groupe motopropulseur hybride selon une revendication précédente, **caractérisé en ce que** l'engrenage différentiel (5) est mis en œuvre comme un train épicycloïdal (5) doté d'un engrenage planétaire central (51) qui s'engrène avec plusieurs engrenages satellites (52) rotatifs individuellement qui sont portés collectivement par un support (53) qui est rotatif de manière coaxiale avec l'engrenage planétaire (51), lesquels engrenages satellites (52) s'engrènent à leur tour avec une couronne (54) qui est de même rotative de manière coaxiale avec l'engrenage planétaire (51).

11. Groupe motopropulseur hybride selon la revendication 10, **caractérisé en ce que** le support (53) du train épicycloïdal (5) est relié en entraînement à, c'est-à-dire tourne d'un seul tenant avec la roue entraînée (3), **en ce que** l'engrenage planétaire (51) du train épicycloïdal (5) est relié en entraînement au, c'est-à-dire tourne d'un seul tenant avec le moteur à combustion interne (1), **en ce que** la couronne (54) du train épicycloïdal (5) est reliée en entraînement à, c'est-à-dire tourne d'un seul tenant avec la machine électrique (2) et **en ce que** pendant le fonctionnement du groupe motopropulseur hybride, un premier couple d'entraînement qui peut être généré au maximum par la machine électrique (2) sur la couronne (54) est supérieur à un second couple d'entraînement qui peut être généré au maximum par le moteur à combustion interne (1) sur l'engrenage planétaire (51).

12. Groupe motopropulseur hybride selon la revendication 10, **caractérisé en ce que** le support (53) du train épicycloïdal (5) est relié en entraînement à, c'est-à-dire tourne d'un seul tenant avec la roue entraînée (3), **en ce que** l'engrenage planétaire (51) du train épicycloïdal (5) est relié en entraînement à, c'est-à-dire tourne d'un seul tenant avec la machine électrique (2), **en ce que** la couronne (54) du train épicycloïdal (5) est reliée en entraînement au, c'est-à-dire tourne d'un seul tenant avec le moteur à combustion interne (1) et **en ce que** pendant le fonctionnement du groupe motopropulseur hybride, un premier couple d'entraînement qui peut être généré au maximum par le moteur à combustion interne (1) sur la couronne (54) est supérieur à un second couple d'entraînement qui peut être généré au maximum par la machine électrique (2) sur l'engrenage planétaire (51).

13. Groupe motopropulseur hybride selon la revendication 11 ou 12, **caractérisé en ce que** ledit premier couple d'entraînement est au moins 15 % supérieur et de préférence est au moins 25 % supérieur audit second couple d'entraînement.

14. Groupe motopropulseur hybride selon l'une des revendications 1 à 9, **caractérisé en ce que** deux desdits trois éléments rotatifs (51, 54, 53) de l'engrenage différentiel (5) sont mis en œuvre comme deux engrenages latéraux (56, 57) de diamètre égal qui sont respectivement reliés en entraînement au/à, c'est-à-dire qui tournent d'un seul tenant avec le moteur à combustion interne (1) et la machine électrique (2) et qui sont tous les deux en contact d'engrènement avec plusieurs engrenages satellites (52) rotatifs individuellement qui sont portés collectivement par un support (53) qui est relié en entraînement à, c'est-à-dire qui tourne d'un seul tenant avec la roue entraînée (3), et **en ce que** pendant le fonctionnement du groupe motopropulseur hybride, un couple d'entraînement qui peut être généré au maximum par le moteur à combustion interne (1) sur l'un (57) des engrenages latéraux (56, 57) et un couple d'entraînement qui peut être généré au maximum par la machine électrique (2) sur l'autre (56) des engrenages latéraux (56, 57) correspondent l'un à l'autre avec une marge de 25 %, de préférence avec une marge de 15 %.
